**Europäisches Patentamt**

**European Patent Office**

**Office européen des brevets**

(19)

(11) Publication number: **0 019 926**

**B1**

(12) **EUROPEAN PATENT SPECIFICATION**

(45) Date of publication of patent specification: **25.01.84**

(21) Application number: **80103027.1**

(22) Date of filing: **30.05.80**

(51) Int. Cl.³: **D 06 N 7/00,** C 08 L 23/08,
C 09 D 3/00, C 08 K 3/00,
C 09 J 3/00

(54) Thermoformable carpet backing composition and a process of making a carpet.

(30) Priority: **01.06.79 US 44541**

(43) Date of publication of application:
**10.12.80 Bulletin 80/25**

(45) Publication of the grant of the patent:
**25.01.84 Bulletin 84/4**

(84) Designated Contracting States:
**DE FR GB SE**

(56) References cited:
FR - A - 1 359 514
US - A - 3 810 807
US - A - 3 911 185
US - A - 4 012 547

CHEMICAL ABSTRACTS, vol. 83, no. 14,
October 6, 1975, page 101, abstract 116270f.
Columbus, Ohio, USA

(73) Proprietor: **UNION CARBIDE CORPORATION**
**Old Ridgebury Road**
**Danbury Connecticut 06817 (US)**

(72) Inventor: **Delvaux, Marie-Jose**
**779 Eve Drive, Apt. 7A**
**Somerville, New Jersey (US)**
Inventor: **Mayer, Walter Paul**
**R.D. Nr. 2, Box 266**
**Lebanon, New Jersey (US)**

(74) Representative: **Weinhold, Peter, Dr. et al,**
**Patentanwälte Dr. V. Schmied-Kowarzik Dipl.-Ing.**
**G. Dannenberg Dr. P. Weinhold Dr. D. Gudel Dipl.-**
**Ing. S. Schubert Siegfriedstr. 8**
**D-8000 München 40 (DE)**

Courier Press, Leamington Spa, England.

# Thermoformable carpet backing composition and a process of making a carpet

This invention relates, in general, to carpet backing compositions, and more specifically to thermoformable carpet backing compositions containing a thermoplastic. Compositions of the present invention are especially suitable for extrusion onto the back of automobile carpets.

Automobile carpet is typically produced in the form of a tufted carpet backsized with a layer of polyolefin. The tufted carpet has a front surface which is exposed to the automobile's interior and a back surface. A carpet backing composition, the subject of the present invention, is then extruded through a slot die onto the back surface of the tufted carpet so as to form a layer. A non-woven pad is then attached to the remaining exposed surface of the carpet backing composition. It is known to use filled polyethylene copolymer compositions as the carpet backing. However, such compositions have difficulty meeting all the specifications required to make good automotive carpet.

Two important properties of carpet backing compositions are weight and stiffness. Weight is defined as the weight of the composition in $g/cm^2$ ($lbs/ft^2$) after it has been extruded onto the sized tufted carpet. The thickness of the composition is not taken into account in measuring weight, since only the weight in $g/cm^2$ ($lbs/ft^2$) of extruded composition determines the value of this important property. Hence, in order to meet minimum weight specification, typically about 0,2929 $g/cm^2$ (about 0,6 $lb/ft^2$), the carpet backing composition is extruded onto the sized tufted carpet at whatever thickness is necessary to provide sufficient weight.

Carpet manufacturers demand that carpet backing compositions have a high weight in order to decrease the sound transmitted through the carpet. Automobile carpeting, should have low stiffness so that the carpet may easily be handled for insertion into the automobile and so that the carpet conforms to the shape of the floor pan. Since the stiffness of the carpet is directly proportional to the cube of the carpet's thickness, it is very difficult to meet both weight and stiffness requirements. If the thickness of the composition is increased in order to meet minimum weight requirements, the stiffness is drastically increased and vice versa. Typical prior art compositions comprising ethylene copolymer and calcium carbonate filler have not been able to simultaneously meet both weight and stiffness requirements.

Other desirable properties for carpet backing compositions are melt strength, hot melt adhesiveness, resistance to cracking when flexed at low temperature, and shape retention after thermoforming.

Accordingly, it is an object of the present invention to provide a thermoformable carpet backing composition having both high weight and low stiffness of the finished carpet.

It is another object of this invention to provide a carpet backing composition having high weight, low stiffness, good melt strength, hot melt adhesiveness, resistance to cracking when flexed at low temperatures, and shape retention after thermoforming.

These and other objects which will be readily evident to those skilled in the art are achieved by the present invention, one aspect of which comprises:
a thermoformable carpet backing composition having good flexibility at a specified coating weight, good melt strength, good hot melt adhesiveness, resistance to cracking when flexed at low temperatures and shape retention after thermoforming comprising:

(A) 16 to 35% based on the total weight of the composition of an ethylene copolymer having 70 to 90% by weight of copolymer of ethylene copolymerized therein, selected from ethylene/vinyl aliphatic acid esters copolymers having 1 to 4 carbons in the aliphatic acid; and ethylene/alkyl acrylate copolymers having 1 to 18 carbons in the alkyl moiety, said ethylene copolymer having a melt index of 0,5 to 12 based on ASTM—D—1238—E,

(B) 65 to 80% based on the total weight of the composition of filler containing at least 55% based on the total weight of filler of barium sulfate, and

(C) from 0 to 8% based on the total weight of the composition of a non-water-soluble plasticiser provided that the total of A+B+C=100%

According to a preferred embodiment the thermoformable carpet comprises the following components:

(A) 23 to 25% based on the total weight of the composition of ethylene/ethyl acrylate copolymer having 84 to 86% by weight of copolymer of ethylene copolymerized therein, said ethylene copolymer having a melt index of 1.0 to 1.6 based on ASTM—D—1238—E.

(B) 71 to 73% based on the total weight of the composition of commericially pure barium sulfate containing about 80 weight% barium sulphate,

(C) 3 to 5% based on the total weight of the composition of naphthenic oil plasticizer having a viscosity range of 1750 to 1850 SUS at 37,8°C (100°F),

(D) 500 to 1000 parts per million by weight of hindered phenol antioxidant based on the total weight of copolymer and oil, provided that the total of A+B+C+D=100%

A second aspect of the invention comprises a process for making a carpet using compositions of the present invention.

Figure 1 is a ternary diagram illustrating preferred compositions of the present invention.

Figure 2 is an illustration of the construction of a typical automobile carpet.

This invention is predicated upon the discovery that compositions containing barium sulfate falling within a relatively narrow composition range, have a surprising combination of good properties including low stiffness, high weight, good melt strength, hot melt adhesiveness, resistance to cracking when being flexed at low temperatures, and shape retention after thermoforming. Compositions of the present invention are comprised of ethylene copolymer, filler and plasticizer with optional anti-oxidants. Each of these ingredients is described in detail below.

Ethylene copolymer

The composition contains 16 to 35% based on the total weight of the composition of ethylene copolymer, preferably 20 to 30%, and most preferably 23 to 25%. The ethylene copolymers have 70 to 90% by weight of the copolymer of ethylene copolymerized with ethylene vinyl aliphatic acid esters having 1 to 4 carbons in the aliphatic acid, or ethylene alkyl acrylate copolymers having 1 to 18 carbons in alkyl moiety. The ethylene copolymers have a melt index of 0,5 to 12 based on ASTM—D—1238—E. The most preferable ethylene copolymer is ethylene ethyl acrylate copolymer having 84 to 86% by weight of copolymer of ethylene copolymerized with the ethyl acrylate and having a melt index of 1.0 to 1,6. This product is sold commercially from Union Carbide Corporation under the tradename Bakelite DPDA—6182. Good results are also obtained if the ethylene ethyl acrylate copolymer has 83 to 87% ethylene copolymerized therein. Other suitable copolymers include ethylene vinyl acetate, ethylene vinyl formate, ethylene vinyl propionate, ethylene vinyl butyrate and ethylene butyl acrylate copolymers.

Filler

The critical ingredient in the filler is barium sulfate. The filler contains at least 55 weight % barium sulfate based on the total weight of filler, and preferably at least 75% barium sulfate. The most preferable filler is commercially pure barium sulfate, (which currently contains about 80 weight % $BaSO_4$) pulverized grade, having a specific gravity of 4,0 to 4,3 and a particle size of 2 to 2,5% retained on 200 mesh and 85 to 90% retained on 325 mesh (weight % cumulative). Filler meeting these requirements is sold by Dresser Minerals under the tradename "Barite No. 85". Filler containing more than 80 weight % barium sulfate, would give better results, however, as shown by the examples of follow, compositions containing Barite No. 85 are completely satisfactory.

Plasticizers

The plasticizers used with the present invention must be non-water-soluble. Suitable plasticizers include ester-type plasticizers such as dimethyl phthalate and dibutyl phthalate, as well as phosphate-type plasticizers such as tributyl, tributoxyethyl, tricresyl, triphenyl, diphenyl, octyl and diphenyl cresyl phosphates.

The preferred plasticizers include naphthenic oil, paraffinic oil, aromatic oil and mixtures thereof having a viscosity range of 40 to 7000 SUS and more preferably 300 to 2500 SUS at 37.8°C (100°F). It is possible to dilute or replace the oil with hydrocarbon tackifier resins consisting of aliphatic, aromatic or rosin derivatives having a softening point of 10° to 35°C when used as a total replacement for the oil. When used to replace up to 50% of the oil, the hydrocarbon resin softening points can be from 10° to 100°C. Hydrocarbon resins are more fully described in US—A—No. 3,914,489 (column 2, lines 34 to 52) and 3,023,200.

The most preferred plasticizer is a naphthenic oil available commercially by the tradename Tufflo 1800 sold by Atlantic-Richfield Comp. having a viscosity range of 1750 to 1850 SUS at 37,8°C (100°F). The preferred hydrocarbon resin is an aromatic hydrocarbon resin sold under the tradename Piccovar AP25 by Hercules. The amounts of plasticizer will be 0 to 8%, preferably 0 to 6% and most preferably 3 to 5% based on the total weight of the composition.

Anti-oxidants

The choice of anti-oxidants is optional. A hindered phenol such as 4,4' methylene bis(2,6 di-tert. butylphenol) or o-tert. butyl phenol is preferred. The most preferred anti-oxidant is tetrakis (methylene (3,5-bi-tert-butyl-4-hydroxy) hydrocinnamate) sold under the tradename Irganox 1010 by Ciba-Geigy. Typically, 500 to 1000 parts per million (ppm) by weight based on the total weight of copolymer and oil would be used.

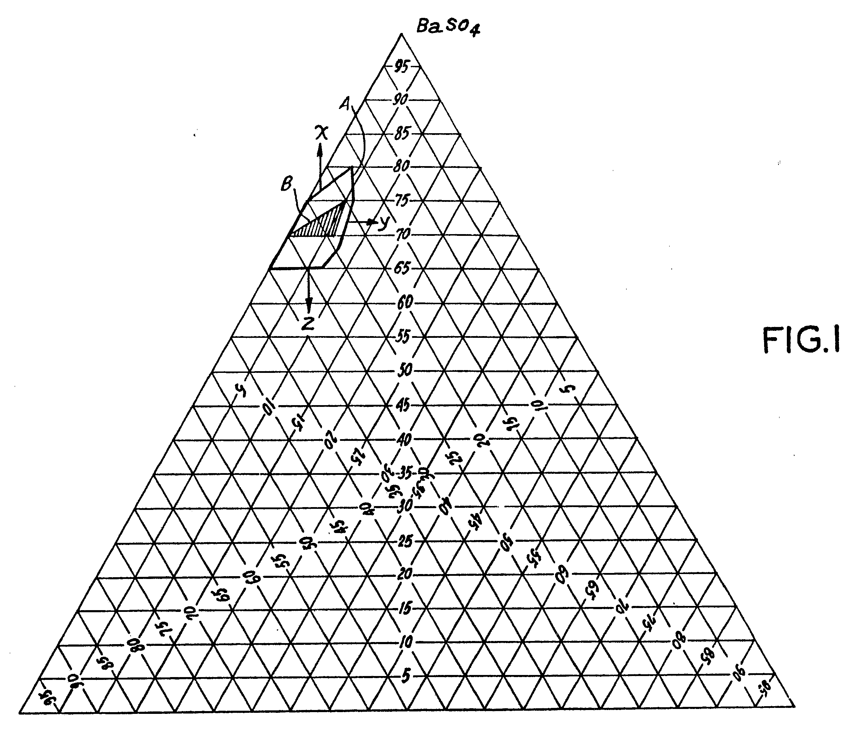

Figure 1 is a ternary diagram illustrating preferred composition ranges for the invention. Curve A bounds a preferred general range of compositions based upon the total weight of copolymer, plasticizer, and commercially pure, i.e. about 80 weight %, barium sulfate. Curve B bounds a triangular area of the most preferred composition range for the present invention, again based upon the weight of copolymer, plasticizer, and commercially pure barium sulfate. Small amounts of additives, such as anti-oxidants, may be added to the compositions shown in Figure 1, provided they do not adversely affect the properties of the composition. If the compositions shown in Figure 1 are not followed, the following adverse results are encountered. Compositions deviating from the region bounded by curve A in the direction of x, that is compositions containing too much barium sulfate, will have poor processing properties, especially increased viscous heating. If the composition bounded by curve A is deviated from in direction y, that is, if too much plasticizer is used, it will exhibit increased sag at the extrusion die, increased fuming, and increased sweat-out of the filler. If too much copolymer is used, i.e. if curve A is departed from in the direction of arrow z, then the composition will contain too much polymer to be economical.

Compositions of the present invention may be prepared by mixing the ingredients in any device capable of blending thermoplastics with fillers, such as Brabender or Banbury mixers or two-roll mills.

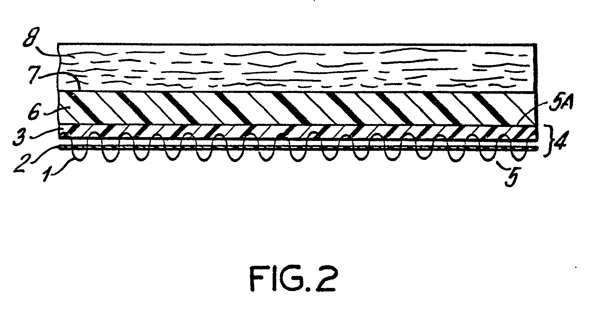

Figure 2 illustrates the method by which the compositions of the present invention are incorporated into a typical automobile carpet. The carpet is shown positioned as it would be during manufacture, which is up-side-down with respect to its position as installed on the floor of an automobile. The carpet may be produced as follows. First tufts 1 are looped into scrim 2. Then a layer of sizing 3, typically a thermoplastic, is extruded over one side of the tufts in order to hold the tufts in place on the scrim. The combination of tufts 1, scrim 2 and sizing 3, called a sized tufted carpet 4, has a front surface 5, which would be exposed on the interior of the automobile, and a rear surface 5A.

Carpet backing composition, the subject of the present invention, is extruded onto back surface 5A of sized tufted carpet 4 so as to form a layer 6 on the back surface. The layer will have an exposed surface 7. Finally, non-woven pad 8 is attached to exposed surface 7 of layer 6. This is preferably accomplished with the layer 6 of the composition in the molten state. Since the composition has good hot melt adhesiveness, non-woven pad 8 will adhere to exposed surface 7 of carpet backing composition layer 6 without use of other adhesives.

Examples

Carpet backing compositions were prepared from the ingredients shown in Table I by mixing the ingredients in a two-roll mill. The compositions were then pressed into flat sheets having a weight of 0,2929 g/cm² (0,6 lbs/ft²). The properties of the pressed compositions were as shown in Table I.

The pliability test performed on Examples 2 and 5, which is in accordance with specifications of a major automobile manufacturer, was performed as follows. Eight samples of 2,54×7,62 cm (1"×3") carpet (consisting of sized tufted carpet and backing, but without non-woven pad) were prepared. Four samples had the tufts running parallel with the 7,62 cm (3") dimension and 4 had the tufts perpendicular to the 7,62 cm (3") dimension Each sample was inserted, pile up, into a Tinius Olsen Stiffness Tester (Model 1 88600—6,91 cm/kg (6 in.lb.) capacity with 0,227 kg (0.5 lb.) additional weight) and secured in place. The machine was adjusted until the sample just touched the deflecting arm and zero pointer. The machine was started and the reading was taken when the pointer reached 20°. The results were averaged. A value below 35 is acceptable.

The relative stiffness test, which was performed on the pressed carpet backing composition only (excluding the non-woven pad and sized tufted carpet), was performed as follows. First the test specified by ASTM—747—70: stiffness in flexure at 23°C was performed. This gave a modulus E in MPa. Next the relative stiffness was calculated by multiplying E by the cube of the thickness of the compositions (necessary to achieve 0,2929 g/cm² (0,6 lb/ft²) weight) in meters to obtain the relative stiffness in N.m. Previous correlations indicate that a value below 1 N.m. is acceptable.

It can be seen that Examples 1, 3 and 4 which comprise compositions in accordance with the present invention all had relative stiffness below the maximum acceptable for this type of composition, but the control composition of Example 5, which is typical of the prior art, had too high a relative stiffness. Example 2, also in accordance with the present invention, had pliability below the maximum acceptable value of 35 and well below that of the prior art composition of example 5. Furthermore, all compositions of the present invention meet the other specifications required of automotive carpet backing compositions.

0 019 926

TABLE I

| | Example no. | | | | |
|---|---|---|---|---|---|
| | 1 | 2 | 3 | 4 | 5 |
| CaCO₃ | — | — | — | 20% | 55% |
| BaSO₄ (Barite No. 85) | 70% | 72% | 80% | 50% | — |
| Ethylene Ethyl Acrylate Copolymer (1) | 27% | 24% | 18% | 27% | — |
| Ethylene Vinyl Acetate Copolymer (2) | — | — | — | — | 45% |
| Aliphatic Oil (3) | 3% | — | — | 3% | — |
| Naphthenic Oil (4) | — | 4% | 1% | — | — |
| Hydrocarbon Resin (5) | — | — | 1% | — | — |
| Antioxidant (6) (Parts per million based on total weight of copolymer and plasticizer) | 750 | 750 | 750 | 750 | 750 |
| Relative stiffness at 0,2929 g/cm² (0.6 lb/ft²) weight N.m | 0.54 | — | 0.51 | 0.93 | 2.19 |
| Pliability of carpet without non-woven pad | — | 28 | — | — | 60 |
| Cold crack at −20°C (loop) | pass | pass | pass | pass | pass |
| Visible Fuming at normal extrusion temperature | none | none | none | none | none |
| Pad adhesion | good | good | good | good | good |
| Shape retention | good | good | good | good | good |
| Weight of layer, g/cm² (lb/ft²) | 0,2929 (0.6) | 0,2929 (0.6) | 0,2929 (0.6) | 0,2929 (0.6) | 0,2929 (0.6) |

(1) 15% Ethyl Acrylate based on weight of copolymer. Melt index of about 1.5
(2) 18% Vinyl Acetate based on weight of copolymer. Melt index of about 2.5
(3) Viscosity of about 335 SUS at 37,8°C (100°F)
(4) Viscosity of about 2100 SUS at 37,8°C (100°F)
(5) Piccovar AP 25
(6) Hindered phenol, Irganox 1010

The percentage of filler, ethylene copolymer and plasticizer are based on the total weight of filler, ethylene copolymer and plasticizer.

## Claims

1. A thermoformable carpet backing composition comprising:

(A) 16 to 35%, preferably 20 to 30%, based on the total weight of the composition of an ethylene copolymer having 70 to 90% by weight of copolymer of ethylene copolymerized therein, selected from ethylene/vinyl aliphatic acid esters copolymers having 1 to 4 carbons in the aliphatic acid; or ethylene/alkyl acrylate copolymers having 1 to 18 carbons in the alkyl moiety, said ethylene copolymer having a melt index of 0.5 to 12 based on ASTM—D—1238—E,

(B) 65 to 80%, preferably 70 to 75%, based on the total weight of the composition of filler containing at least 55% based on the total weight of filler of barium sulfate, and

(C) from 0 to 8%, preferably 0 to 6%, based on the total weight of the composition of a non-water-soluble plasticizer provided that the total of A+B+C=100%

2. The composition of claim 1 wherein the filler is commercially pure barium sulfate containing about 80 weight % barium sulfate and the weight percentages of ethylene copolymer, filler and plasticizer based on the total weight of ethylene copolymer, filler and plasticizer fall within the area bounded by curve A or curve B of Figure 1.

3. The compositions of one or more of the claims 1—2 wherein the filler contains at least 75% barium sulfate based on the total weight of the filler, or is commercially pure barium sulfate containing about 80 weight % barium sulfate.

4. The composition of one or more of the claims 1—3 wherein the ethylene copolymer is ethylene/ethyl acrylate copolymer having 83 to 87% by weight of ethylene copolymerized therein.

5. The composition of one or more of the claims 1—4 wherein the ethylene copolymer is ethylene butyl/acrylate.

6. The composition of one or more of the claims 1—3 wherein the ethylene copolymer is selected from ethylene/vinyl acetate, ethylene/vinyl formate, ethylene/vinyl propionate or ethylene/vinyl butyrate copolymers.

7. The composition of one or more of the claims 1—6 containing 500 to 1000 parts per million by weight of antioxidant based on the total weight of copolymer and oil.

8. The composition of one or more of the claims 1—7 wherein the plasticizer is selected from hydrocarbon oils, preferably from naphthenic oil, paraffinic oil, aromatic oil and mixtures thereof having a viscosity of 40 to 7000 SUS, preferably 300 to 2500 SUS, at 37,8°C (100°F), hydrocarbon tackifier resins consisting of aliphatic, aromatic, or rosin derivatives, having a softening point of 10 to 35°C or

5

mixtures of up to 50% tackifier with oil wherein the hydrocarbon resin has a softening point of 10 to 100°C.

9. A thermoformable carpet backing composition comprising:

(A) 23 to 25% based on the total weight of the composition of ethylene/ethyl acrylate copolymer having 84 to 86% by weight of copolymer of ethylene copolymerized therein, said ethylene copolymer having a melt index of 1.0 to 1.6 based on ASTM—D—1238—E,

(B) 71 to 73% based on the total weight of the composition of commercially pure barium sulfate containing about 80% weight % barium sulphate,

(C) 3 to 5% based on the total weight of the composition of naphthenic oil plasticizer having a viscosity range of 1750 to 1850 SUS at 37,8°C (100°F),

(D) 500 to 1000 parts per million by weight of hindered phenol antioxidant based on the total weight of copolymer and oil, provided that the total of A+B+C+D=100%.

10. A process of making a carpet comprising the steps of:

(A) forming a sized tufted carpet having a front surface and a back surface,

(B) extruding the composition of one or more of the claims 1—7 onto the back surface of said sized tufted carpet so as to form a layer on the back surface thereof, said layer having an exposed surface and if desired,

(C) attaching a non-woven pad to the exposed surface of said layer.

**Revendications**

1. Composition thermoformable pour dossier de tapis comprenant:

(A) 16 à 35%, de préférence 20 à 30%, sur la base du poids total de la composition, d'un copolymère d'éthylène renfermant à l'état copolymérisé 70 à 90% d'éthylène, par rapport au poids du copolymère, choisi entre des copolymères d'éthylène et d'esters d'acides aliphatiques vinyliques ayant 1 à 4 atomes de carbone dans l'acide aliphatique; ou des copolymères d'éthylène et d'acrylate d'alkyle ayant 1 à 18 atomes de carbone dans la partie alkyle, ledit copolymère d'éthylène ayant un indice de fluidité de 0,5 à 12 sur la base de ASTM—D—1238—E,

(B) 65 à 80%, de préférence 70 à 75%, sur la base du poids total de la composition, d'une charge contenant au moins 55% de sulfate de baryum sur la base du poids total de la charge, et

(C) de 0 à 8%, de préférence 0 à 6%, sur la base du poids total de la composition, d'un plastifiant non hydrosoluble pourvu que le total de A+B+C=100.

2. Composition selon la revendication 1, dans laquelle la charge est du sulfate de baryum commercialement pur contenant environ 80% en poids de sulfate de baryum et les pourcentages en poids du copolymère d'éthylène, de la charge et du plastifiant, sur la base du poids total du copolymère d'éthylène, de la charge et du plastifiant, sont compris dans l'aire délimitée par la courbe A ou la courbe B de la figure 1.

3. Compositions d'une ou plusieurs des revendications 1—2, dans lesquelles la charge contient au moins 75% de sulfate de baryum sur la base du poids total de la charge, ou est du sulfate de baryum commercialement pur contenant environ 80% en poids de sulfate de baryum.

4. Composition d'une ou plusieurs des revendications 1—3, dans laquelle le copolymère d'éthylène est un copolymère d'éthylène et d'acrylate d'éthyle renfermant à l'état copolymérisé 83 to 87% en poids d'éthylène.

5. Composition d'une ou plusieurs des revendications 1—4, dans laquelle le copolymère d'éthylène est un copolymère d'éthylène et d'acrylate de butyle.

6. Composition d'une ou plusieurs des revendications 1—3, dans laquelle le copolymère d'éthylène est choisi parmi des copolymères d'éthylène et d'acétate de vinyle, d'éthylène et de formiate de vinyle, d'éthylène et de propionate de vinyle, ou d'éthylène et de butyrate de vinyle.

7. Composition d'une ou plusieurs des revendications 1—6, contenant 500 à 1000 parties par million, en poids, d'un anti-oxydant, sur la base du poids total du copolymère et d'une huile.

8. Composition d'une ou plusieurs des revendicartions 1—7, dans laquelle le plastifiant est choisi parmi des huiles hydrocarbonées, de préférence entre de l'huile naphténique, de l'huile paraffinique, de l'huile aromatiqe et des mélanges de ces huiles, avant une viscosité de 40 à 7000 SUS, de préférence 300 à 2500 SUS, à 37,8°C (100°F), des résines hydrocarbonées d'adhésivité constituées de dérivés aliphatiques, aromatiques ou de colophane, ayant un point de ramollisement de 10 à 35°C ou des mélanges de jusqu'à 50% d'agent d'adhésivité avec de l'huile, la résine hydrocarbonée ayant un point de ramollissement de 10 à 100°C.

9. Composition thermoformable pour dossier de tapis comprenant:

(A) 23 à 25%, sur la base du poids total de la composition, d'un copolymère d'èthylène et d'acrylate d'éthyle renfermant de l'èthylène, à l'état copolymérisé, à raison de 84 à 86% du poids du copolymère, ledit copolymère d'éthylène ayant un indice de fluidité de 1,0 à 1,6 sur la base de ASTM—D—1238—E,

(B) 71 à 73%, sur la base du poids total de la composition, de sulfate de baryum commercialement pur contenant environ 80% en poids de sulfate de baryum,

(C) 3 à 5%, sur la base du poids total de la composition, d'huile naphténique en tant que plastifiant ayant une plage de viscosité de 1750 à 1850 SUS à 37,8°C (100°F),

(D) 500 à 1000 parties par million, en poids, d'anti-oxydant phénolique à encombrement stérique, sur la base du poids total du copolymère et de l'huile, pourvu que le total de A+B+C+D=100%.

10. Procédé de fabrication d'un tapis, comprenant les étapes qui consistent:

(A) à former un tapis touffeté apprêté ayant une surface avant et une surface arrière,

(B) à extruder la composition d'une ou plusieurs des revendications 1—7 sur la surface arrière dudit tapis touffeté apprêté afin de former une couche sur cette surface arrière, ladite couche ayant une surface exposée, et, si cela est souhaité,

(C) à fixer une semelle non tissée à la surface exposée de ladite couche.

**Patentansprüche**

1. Durch Wärme formbare Zusammensetzung für Teppichunterseiten, welche umfaßt:

(A) 16 bis 35%, vorzugsweise 20 bis 30% (bezogen auf das Gesamtgewicht der Zusammensetzung) eines Ethylen-Copolymeren mit 70 bis 90 Gew.-% des Copolymeren an darin mischpolymerisiertem Ethylen, ausgewählt von Copolymeren mit Ethylen/Vinylester aliphatischer Säuren mit 1 bis 4 Kohlenstoffatomen in der aliphatischen Säure; Copolymeren mit Ethylen/Alkylacrylat mit 1 bis 18 Kohlenstoffatomen in der Alkylgruppe,

wobei genanntes Ethylen-Copolymer einen Schmelzindex von 0,5 bis 12 (nach ASTM—D—1238—E) aufweist,

(B) 65 bis 80%, vorzugsweise 70 bis 75% (bezogen auf das Gesamtgewicht der Zusammensetzung) an Füllmittel, welches mindestens 55% (bezogen auf das Gesamtgewicht an Fullmittel) Bariumsulfat enthält, und

(C) 0 bis 8%, vorzugsweise 0 bis 6% (bezogen auf das Gesamtgewicht der Zusammensetzung) eines in Wasser unlöslichen Weichmachers,

unter der Voraussetzung, daß die Summe von A+B+C=100 ist.

2. Zusammensetzung nach Anspruch 1, worin das Füllmittel handelsübliches reines Bariumsulfat ist, das etwa 80 Gew.-% Bariumsulfat enthält, und der Gewichtsprozentsatz an Ethylen-Copolymer, Füllmittel sowie Weichmacher innerhalb der Fläche liegt, die durch Kurve A oder Kurve B nach Fig. 1 begrenzt wird.

3. Zusammensetzung nach einem oder mehreren der Ansprüche 1—2, worin das Füllmittel wenigstens 75% Bariumsulfat, bezogen auf das Gesamtgewicht an Füllmittel, enthält, oder handelsübliches reines Bariumsulfat ist, das etwa 80 Gew.-% Bariumsulfat enthält.

4. Zusammensetzung nach einem oder mehreren der Ansprüche 1—3, worin das Ethylen - Copolymer Ethylen/Ethylacrylat-Copolymer mit 83 bis 87 Gew.-% darin mischpolymerisiertem Ethylen ist.

5. Zusammensetzung nach einem oder mehreren der Ansprüche 1—4, worin das Ethylen-Copolymer Ethylen Butylacrylat ist.

6. Zusammensetzung nach einem oder mehreren der Ansprüche 1—3, worin das Ethylen-Copolymer ausgewählt wurde von Ethylen/Vinylacetat, Ethylen/Vinylformat-, Ethylen/Vinylpropionat- oder Ethylen/Vinylbutyrat-Copolymeren.

7. Zusammensetzung nach einem oder mehreren der Ansprüche 1—6, welche 500 pro Million Gew.-Teile an einem Antioxidationsmittel, bezogen auf das Gesamtgewicht an Copolymer und Öl, enthält.

8. Zusammensetzung nach einem oder mehreren der Ansprüche 1—7, worin der Weichmacher ausgewählt wurde von Kohlenwasserstoffölen, vorzugsweise von Naphthenöl, Paraffinöl, aromatischem Öl sowie Mischungen von diesen mit einer Viskosität von 40 bis 700 SUS, vorzugsweise 300 bis 2500 SUS, bei 37,8°C (100°F) klebrig-machenden Kohlenwasserstoffharzen mit einem Erweichungpunkt von 10 bis 35°C oder Mischungen bestehend aus aliphatischen, aromatischen oder Kolophonium-Derivaten, bis zu 50% Klebrigmacher mit Öl, worin das Kohlenwasserstoffharz einen Erweichungspunkt von 10 bis 100°C hat.

9. Durch Wärme formbare Zusammensetzung für Teppichunterseiten, welche umfaßt:

(A) 23 bis 25%, bezogen auf das Gesamtgewicht der Zusammensetzung, an Ethylen/Ethylacrylat-Copolymer mit 84 bis 86 Gew.-% des Copolymeren an darin mischpolymerisiertem Ethylen, wobei das genannte Ethylen-Copolymer einen Schmelzindex von 1,0 bis 1,6, nach ASTM—D—1238—E, hat

(B) 71 bis 73%, bezogen auf das Gesamtgewicht der Zusammensetzung, an handelsüblich reinem Bariumsulfat, das etwa 80 Gew.-% Bariumsulfat enthält,

(C) 3 bis 5%, bezogen auf das Gesamtgewicht der Zusammensetzung, an Naphthenöl-Weichmacher mit einer Viskosität im Bereich von 1750 bis 1850 SUS bei 37,8°C (100°F),

(D) 500 bis 1000 Gew.-TpM gehindertes Phenol-Antioxidationsmittel, bezogen auf des Gesamtgewicht an Copolymer und Öl,

unter der Voraussetzung, daß die Summe von A+B+C+D=100% ist.

10. Verfahren zur Herstellung eines Teppichs, das die folgenden Schritte unfaßt:

(A) Bildung eines geschlichteten Tufted-Teppichs mit einer oberen und unteren Oberfläche,

(B) Strangpressen der Zusammensetzung nach einem oder mehreren der Ansprüche 1—7, auf die untere Oberfläche des geschlichteten Tufted-Teppichs, um eine Schicht auf der unteren Oberfläche von diesem zu bilden, wobei diese Schicht eine freiliegende Oberfläche hat und gegebenenfalls

(C) Anbringen einer Faservliespolsterung auf die freiliegende Oberfläche der genannten Schicht.

FIG.1

0 019 926

FIG.2